# EUROPEAN PATENT APPLICATION

(11) **EP 3 611 978 A1**
(43) Date of publication of application: **19.02.2020**
(21) Application number: 17908669.9
(22) Date of filing: 04.05.2017
(51) Int. Cl.: H04W 72/04

(54) **DATA TRANSMITTING AND RECEIVING METHOD AND RELATED PRODUCT**

(71) Applicant: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN)
(74) Representative: Manitz Finsterwald Patent- und Rechtsanwaltspartnerschaft mbB
(86) International application number: PCT/CN2017/083090
(87) International publication number: WO 2018/201405

(57) **Abstract**

A method for transmitting and receiving data and related products are provided, applied to a communication system, where the communication system includes a user equipment group, the user equipment group includes a plurality of user equipments, the method includes: performing, by the user equipments, data transmission and reception according to specified resource related information, the specified resource related information including a plurality of specified times and/or a plurality of specified resources. Using embodiments of the present application, the conflict probability when the UEs within the group occupy resources can be reduced and the signaling overhead of resource scheduling can be reduced.

## Description

### TECHNICAL FIELD

The present application relates to the field of communications technologies, and particularly to a method for transmitting and receiving data and related products.

### BACKGROUND

In a scenario of direct communication between user equipments (UEs), for convenience of communication or management, UEs form a group due to a close distance between the UEs, a same movement track of the UEs, or a mutual trust connection relationship between the UEs. For example, for a vehicle column in an Internet of Vehicles, there may be an association relationship between different vehicles, such as vehicles moving at fixed intervals, fixed moving speeds, fixed tracks, etc, and these vehicles form a group. There is another example, a device group in a scenario of wearable devices. The device group includes one or more Relay UEs and one or more Remote UEs with association or connection relationships. The devices in the device group have a mutual trust relationship, and movement tracks and movement speed are basically the same.

For the UE group that exists in the form of a group, when the UEs transmit and receive data, there may be a conflict problem of resource occupation and an overhead problem of resource scheduling signaling, therefore, how to reduce the conflict probability when the UEs within the group occupy resources and how to reduce the signaling overhead of resource scheduling are technical problems that need to be solved.

### SUMMARY

Embodiments of the present application provide a method for transmitting and receiving data and related products, which are used to reduce the conflict probability when UEs within a group occupy resources and reduce the signaling overhead of resource scheduling.

In a first aspect, an embodiment of the present application provides a method for transmitting and receiving data, applied to a communication system, where the communication system includes a user equipment group, and the user equipment group includes a plurality of first user equipments, where the method includes:
performing, by the user equipments, data transmission and reception according to specified resource related information, the specified resource related information including a plurality of specified times and/or a plurality of specified resources.

In a second aspect, an embodiment of the present application provides a user equipment, applied to a communication system, where the communication system includes a user equipment group, and the user equipment group includes a plurality of first user equipments, where the user equipment includes a processing unit and a communication unit,
the communication unit is configured to perform, through the communication unit, data transmission and reception according to specified resource related information, the specified resource related information including a plurality of specified times and/or a plurality of specified resources.

In a third aspect, an embodiment of the present application provides a user equipment, including one or more processors, one or more memories, one or more transceivers, and one or more programs, where the one or more programs are stored in the memories and configured to be executed by the one or more processors, and the programs include instructions for performing steps in the method of the first aspect.

In a fourth aspect, an embodiment of the present application provides a computer readable storage medium, storing a computer program for electronic data exchange, where the computer program causes a computer to execute the method of the first aspect.

In a fifth aspect, an embodiment of the present application provides a computer program product, where the computer program product includes a non-transitory computer readable storage medium storing a computer program, and the computer program is operative to cause a computer to execute the method of the first aspect.

It can be seen that, in this solution, the user equipments do not need to perform resource scheduling before performing data transmission and reception every time, thereby reducing the signaling overhead of resource scheduling; in addition, each user equipment performs data transmission and reception according to the specified resource related information, thereby reducing the conflict probability when the UEs within the group occupy resources.

These and other aspects of the present application will be more apparent and easy to understand in the description of the following embodiments.

### BRIEF DESCRIPTION OF THE DRAWINGS

In order to more clearly illustrate technical solutions in embodiments of the present application or in the prior art, a brief description of the drawings used in the description of the embodiments or the prior art will be given below. Obviously, the drawings in the following description are only some embodiments of the present application, and other drawings can be obtained according to these drawings by those skilled in the art without any creative efforts.
FIG. 1 is a schematic diagram of a network architecture according to an embodiment of the present application;
FIG. 2a is a schematic flowchart of a method for transmitting and receiving data according to an embodiment of the present application;
FIG. 2b is a schematic diagram of a plurality of specified times according to an embodiment of the present application;
FIG. 2c is a schematic diagram of each specified time and a plurality of specified resources according to an embodiment of the present application;
FIG. 2d is a schematic diagram of specified resource related information corresponding to a plurality of first user equipments according to an embodiment of the present application;
FIG. 2e is a schematic diagram of another specified resource related information corresponding to a plurality of first user equipments according to an embodiment of the present application;
FIG. 2f is a schematic diagram of another specified resource related information corresponding to a plurality of first user equipments according to an embodiment of the present application;
FIG. 3 is a schematic structural diagram of a user equipment according to an embodiment of the present application;
FIG. 4 is a schematic structural diagram of another user equipment according to an embodiment of the present application; and
FIG. 5 is a schematic structural diagram of another user equipment according to an embodiment of the present application.

### DETAILED DESCRIPTION OF THE EMBODIMENTS

In order to enable those skilled in the art to better understand the solutions of the present application, the technical solutions in embodiments of the present application are clearly and completely described in the following with reference to the accompanying drawings in the embodiments of the present application. Obviously, the described embodiments are only part of the embodiments of the present application, rather than all of them. Based on the embodiments in the present application, all other embodiments obtained by those skilled in the art without creative efforts shall fall within the protection scope of the present application.

Detailed descriptions are as follows.

The terms "first", "second", "third", and "fourth" and the like in the specification, claims and the drawings of the present application are used to distinguish different objects, but are not used to describe a specific order. In addition, the terms "comprising" and "having" and any variants thereof are intended to cover a non-exclusive inclusion. For example, a process, a method, a system, a product, or a device that includes a series of steps or units is not limited to the listed steps or units, but optionally includes steps or units that are not listed, or optionally further includes other steps or units inherent to the process, the method, the product or the device.

References to "an embodiment" herein mean that a particular feature, structure, or characteristic described in connection with the embodiment may be included in at least one embodiment of the present application. The appearance of such phrase in various places of the specification is neither necessarily referring to the same embodiment, nor referring to an embodiment that is mutually exclusive with, or independent from, or alternative to other embodiments. Those skilled in the art understand explicitly and implicitly that the embodiments described herein can be combined with other embodiments.

The embodiments of the present application are described below with reference to the accompanying drawings.

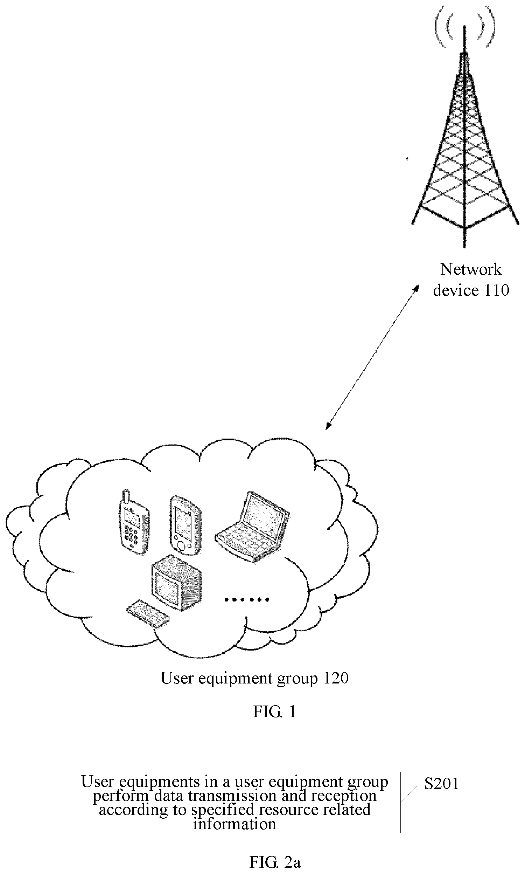

Please refer to FIG. 1, which is a schematic diagram of a network architecture according to an embodiment of the present application. The network architecture shown in FIG. 1 includes a network device 110 and a user equipment group 120, the user equipment group includes a plurality of user equipments, and the plurality of user equipments include a plurality of ordinary equipments (where an ordinary equipment is a first user equipment) and a group head equipment (where the group head equipment is a second user equipment). One ordinary equipment i in the user equipment group 120 can communicate with other ordinary equipments in the user equipment group 120 other than the ordinary equipment i, or one ordinary equipment i in the user equipment group 120 can communicate with the group head equipment in the user equipment group 120, where the ordinary equipment i is one of the plurality of ordinary equipments. The group head equipment in the user equipment group 120 can communicate with the ordinary equipments in the user equipment group 120, or the group head equipment in the user equipment group 120 can communicate with the network device 110.

It should be noted that, it is assumed that the user equipment group 120 includes five user equipments, and the five user equipments are: user equipment 1, user equipment 2, user equipment 3, user equipment 4, and user equipment 5. In the first time period, the user equipment group 120 includes four first user equipments (such as user equipment 1, user equipment 2, user equipment 3, and user equipment 4) and one second user equipment (such as user equipment 5); in the second time period, the user equipment group 120 includes four first user equipments (such as user equipment 2, user equipment 3, user equipment 4, and user equipment 5) and one second user equipment (such as user equipment 1); and in the third time period, the user equipment group 120 includes four first user equipments (such as user equipment 1, user equipment 2, user equipment 3, and user equipment 4) and one second user equipment (such as user equipment 5). It can be seen that the group head equipment in the user equipment group 120 may be the same or different in different time periods, which is not limited in the present application. In addition, the user equipment i may be a first user equipment in the time period I, and then the user equipment i may be a second user equipment in another time period J, where the user equipment i is one user equipment of the user equipment group 120.

Each user equipment in the user equipment group 120 corresponds to one piece of specified resource related information, and each the user equipment included in the user equipment group 120 performs data transmission and reception according to the corresponding specified resource related information, the specified resource related information including a plurality of specified times and/or a plurality of specified resources.

It can be seen that, in this solution, the user equipments in the user equipment group 120 do not need to perform resource scheduling before performing data transmission and reception every time, thereby reducing signaling overhead of resource scheduling; in addition, each user equipment in the user equipment group 120 performs data transmission and reception according to the corresponding resource related information, thereby reducing the conflict probability when the UEs within the group occupy resources.

A User Equipment (UE) is an equipment that provides voice and/or data connectivity to a user, for example, a handheld equipment with wireless connectivity, an in-vehicle equipment, etc. Common user equipments include, for example, mobile phones, tablets, laptops, palmtops, mobile internet devices (MIDs), wearable devices, such as smart watches, smart bracelets, pedometers, etc.

A network device refers to a node device on the network side, for example, the network device may be a Radio Access Network (RAN) device on the access network side of a cellular network, and the RAN device is a device that enables a user equipment to access a wireless network, including but not limited to: an evolved Node B (eNB), a radio network controller (RNC), a Node B (NB), a Base Station Controller (BSC), a Base Transceiver Station (BTS), a home base station (for example, a Home evolved NodeB or a Home Node B (HNB)), a BaseBand Unit (BBU); for another example, the network device may also be a node device in a Wireless Local Area Network (WLAN), such as an access controller (AC), a gateway, or a WIFI Access Point (AP) etc.

A method for transmitting and receiving data provided by an embodiment of the present application is described in detail below in conjunction with the network architecture shown in FIG. 1.

Please refer to FIG. 2a, which is a schematic flowchart of a method for transmitting and receiving data according to an embodiment of the present application. The method includes the following steps.

S201, user equipments in a user equipment group perform data transmission and reception according to specified resource related information, the specified resource related information including a plurality of specified times and/or a plurality of specified resources.

Each user equipment in the user equipment group corresponds to one piece of specified resource related information. For example, the user equipment group includes N user equipments, and the N user equipments correspond to N pieces of specified resource related information, where the N user equipments correspond one-to-one to N pieces of specified resource related information, and N is an integer greater than 1.

In an example, the spacing between any two adjacent specified times of the plurality of specified times included in the specified resource related information is the same, and a plurality of specified resources corresponding to each specified time are the same.

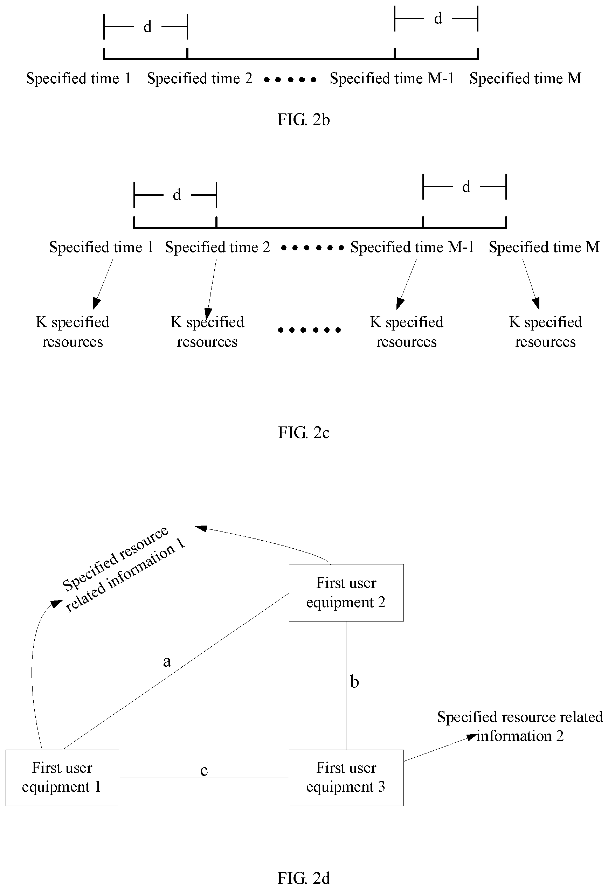

For example, as shown in FIG. 2b, FIG. 2b is a schematic diagram of a plurality of specified times according to an embodiment of the present application. Assuming that there are M specified times for a plurality of specified times, the M specified times are arranged in chronological order: specified time 1, specified time 2... specified time M-1 and specified time M. The spacing between any two adjacent specified times of the M specified times may be equal to d. That is to say, the M specified times are periodic, for example, there is one specified time every 100ms.

For another example, as shown in FIG. 2c, FIG. 2c is a schematic diagram of each specified time and a plurality of specified resources according to an embodiment of the present application. Assuming that there are K specified resources for a plurality of specified resources, and the K specified resources corresponding to each specified time in the M specified times may be the same, and K is an integer greater than 1.

Certainly, the spacing between any two adjacent specified times of the plurality of specified times may be different, and the plurality of specified resources corresponding to each specified time may also be different, which is not limited in the present application.

For example, it is assumed that the user equipment group includes five user equipments, which are: user equipment 1, user equipment 2, user equipment 3, user equipment 4, and user equipment 5, where user equipment 1 corresponds to specified resource related information 1, user equipment 2 corresponds to specified resource related information 2, user equipment 3 corresponds to specified resource related information 3, user equipment 4 corresponds to specified resource related information 4, and user equipment 5 corresponds to specified resource related information 5. The user equipment group includes four first user equipments (such as user equipment 1, user equipment 2, user equipment 3, and user equipment 4) and one second user equipment (such as user equipment 5). The user equipment i in the user equipment group performs data transmission and reception according to the corresponding specified resource related information, and the user equipment i is one of the five user equipments.

It can be seen that, in this solution, the user equipments in the user equipment group 120 do not need to perform resource scheduling before performing data transmission and reception every time, thereby reducing the signaling overhead of resource scheduling; in addition, each user equipment in the user equipment group performs data transmission and reception according to the corresponding resource related information, thereby reducing the conflict probability when the UEs within the group occupy resources.

In an example, each first user equipment corresponds to one piece of specified resource related information; when at least two first user equipments of the plurality of first user equipments meet a preset condition, the specified resource related information corresponding to the at least two first user equipments is the same; when at least two first user equipments in the plurality of first user equipments do not meet a preset condition, the specified resource related information corresponding to the at least two first user equipments is different.

Further, the preset condition is that a distance between any two of the at least two first user equipments is greater than or equal to a first preset threshold.

For example, as shown in FIG. 2d, FIG. 2d is a schematic diagram of specified resource related information corresponding to a plurality of first user equipments according to an embodiment of the present application. As shown in FIG. 2d, it is assumed that there are three first user equipments for the plurality of first user equipments, and the three first user equipments are: first user equipment 1, first user equipment 2, and first user equipment 3. The distance between first user equipment 1 and first user equipment 2 is equal to a, the distance between first user equipment 2 and first user equipment 3 is equal to b, the distance between first user equipment 1 and first user equipment 3 is equal to c, and it is assumed that a is greater than the first preset threshold, b is smaller than the first preset threshold, and c is smaller than the first preset threshold. Then the specified resource related information corresponding to first user equipment 1 and first user equipment 2 is the same (for example, specified resource related information 1), the specified resource related information corresponding to first user equipment 2 and first user equipment 3 is different, and the specified resource related information corresponding to first user equipment 1 and first user equipment 3 is different. The specified resource related information of first user equipment 3 may be specified resource related information 2, and specified resource related information 1 is different from specified resource related information 2.

Further, the preset condition is that a signal strength between any two of the at least two first user equipments is less than or equal to a second preset threshold.

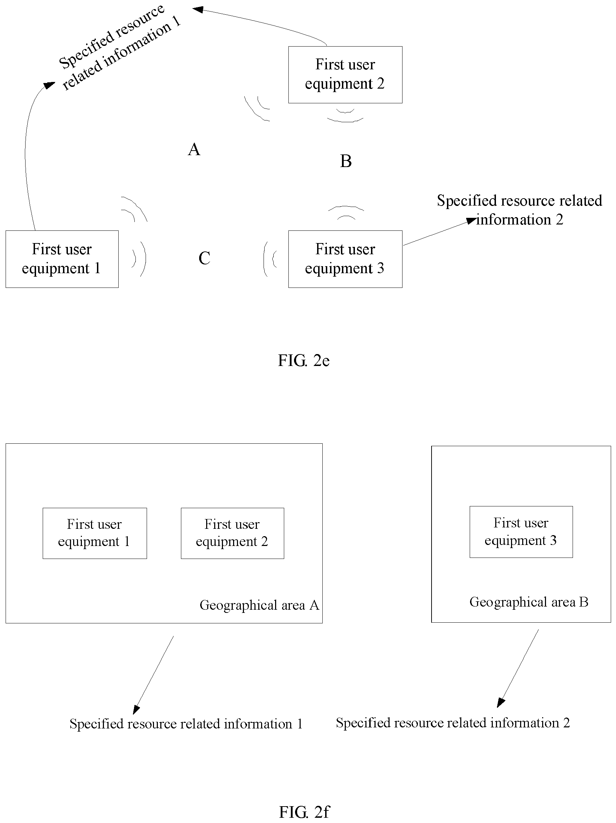

For example, as shown in FIG. 2e, FIG. 2e is a schematic diagram of another specified resource related information corresponding to a plurality of first user equipments according to an embodiment of the present application. As shown in FIG. 2e, it is assumed that there are three first user equipments for the plurality of first user equipments, and the three first user equipments are: first user equipment 1, first user equipment 2, and first user equipment 3. The signal strength between first user equipment 1 and first user equipment 2 is equal to A, the signal strength between first user equipment 2 and first user equipment 3 is equal to B, the signal strength between first user equipment 1 and first user equipment 3 is equal to C, and it is assumed that A is smaller than the second preset threshold, B is greater than the second preset threshold, and C is greater than the second preset threshold. Then the specified resource related information corresponding to first user equipment 1 and first user equipment 2 is the same, for example, both are specified resource related information 1, the specified resource related information corresponding to first user equipment 2 and first user equipment 3 is different, and the specified resource related information corresponding to first user equipment 1 and first user equipment 3 is different. The specified resource related information of first user equipment 3 may be specified resource related information 2, and specified resource related information 1 is different from specified resource related information 2.

Further, the preset condition is whether any two of the at least two first user equipments are not in the same geographical area.

For example, as shown in FIG. 2f, FIG. 2f is a schematic diagram of another specified resource related information corresponding to a plurality of first user equipments according to an embodiment of the present application. As shown in FIG. 2f, it is assumed that there are three first user equipments for the plurality of first user equipments, and the three first user equipments are: first user equipment 1, first user equipment 2, and first user equipment 3. First user equipment 1 and first user equipment 2 are in the same geographical area (such as a geographical area A shown in FIG. 2f), first user equipment 3 is in a geographic area B. Then the specified resource related information corresponding to first user equipment 1 and first user equipment 2 is the same (such as specified resource related information 1 shown in FIG. 2f), the specified resource related information corresponding to first user equipment 2 and first user equipment 3 is different, and the specified resource related information corresponding to first user equipment 1 and first user equipment 3 is different. The specified resource related information of first user equipment 3 may be specified resource related information 2, and specified resource related information 1 is different from specified resource related information 2. The geographic area A and the geographical area B are divided according to the geographical location in advance, which may be divided by the network device or may be divided by the second user equipment, which is not limited in the present application.

It should be noted that, the specified resource related information corresponding to the first user equipment i and the first user equipment j being the same is to specify that the plurality of specified times corresponding to the first user equipment i are the same as the plurality of specified times corresponding to the first user equipment j, and/or the plurality of specified resources corresponding to the first user equipment i are the same as the plurality of specified resources corresponding to the first user equipment j. The specified resource related information corresponding to the first user equipment i and the first user equipment j being different is to specify that the plurality of specified times corresponding to the first user equipment i are different from the plurality of specified times corresponding to the first user equipment j, and/or the plurality of specified resources corresponding to the first user equipment i are different from the plurality of specified resources corresponding to the first user equipment j.

In an example, the specified resource related information of the first user equipments is configured by the second user equipment. Specifically, the second user equipment configures specified resource related information for each first user equipment in the user equipment group according to the condition of resources that are allocated by the network device to the second user equipment. For example, the user equipment group includes three first user equipments. The second user equipment allocates a specified resource PRB1 to first user equipment 1, and the period of the plurality of specified times is 100 ms; the second user equipment allocates a specified resource PRB2 to first user equipment 2, and the period of the plurality of specified times is 100 ms; and the second user equipment allocates a specified resource PRB3 to first user equipment 3, and the period of the plurality of specified times is 100 ms.

In an example, the specified resource related information of the first user equipments is configured by the network device. That is, the network device directly configures specified resource related information for the first user equipments.

In an example, the specified resource related information of the first user equipments is determined by the first user equipments according to the IDs of the first user equipments. That is, a first user equipment determines its own specified resource information according to its own ID (such as using a manner of ID Mode X, X configurable). The ID can be configured by the second user equipment or the network device. For example, the remainder obtained after the first user equipment ID Mode X is 1, then the PRB1 + configured period 1 is used; the remainder is 2, then the PRB2 + configured period 2 is used, and so on. The above configuration can be pre-configured.

In an example, when the specified resource related information of the first user equipments is configured by the second user equipment, the specified resource related information used by the second user equipment is configured by the network device. That is, when the specified resource related information of the first user equipments is configured by the second user equipment, the specified resource related information configured by the second user equipment for the first user equipments is configured based on the specified resource related information configured by the network device for the second user equipment. Or, when the specified resource related information of the first user equipments is configured by the second user equipment, the specified resource related information used by the second user equipment for transmitting and receiving data is configured by the network device.

In an example, the specified resource related information further includes specified transmission power.

Specifically, the user equipments in the user equipment group can determine the transmission power according to the location. If the user equipment i is close to other user equipments in the group, the transmission power can be smaller, and if the user equipment i is far away from other user equipments in the group, the transmission power can be larger.

In an example, when the specified resource related information of the first user equipments is configured by the second user equipment, or, when the specified resource related information of the first user equipments is configured by the network device, the specified resource related information of the first user equipments is configured by the second user equipment or the network device through system information or dedicated signaling.

The system information may have, for example, Common Resource Configuration in SIB2, etc, and the dedicated signaling may have, for example, RRC Reconfiguration, etc.

Specifically, a specific implementation for the second user equipment to configure specified resource related information of a first user equipment through system information or dedicated signaling may be that: the second user equipment transmits system information or dedicated signaling to the first user equipment, where the specified resource related information of the first user equipment is carried in the system information or the dedicated signaling; after receiving the system information or the dedicated signaling transmitted by the second user equipment, the first user equipment can obtain the specified resource related information of the first user equipment.

Specifically, a specific implementation for the network device to configure specified resource related information of a first user equipment through system information or dedicated signaling may be that: the network device transmits system information or dedicated signaling to the second user equipment, where the specified resource related information of the first user equipment is carried in the system information or the dedicated signaling; after the second user equipment receives the system information or the dedicated signaling transmitted by the network device, the second user equipment transmits the specified resource related information of the first user equipment carried in the system information or the dedicated signaling to the first user equipment.

In an example, when the specified resource related information of the first user equipments is configured by the second user equipment, or, when the specified resource related information of the first user equipments is configured by the network device, the specified resource related information of the first user equipments is broadcast by the second user equipment or the network device through a broadcast channel.

Specifically, a specific implementation for the second user equipment to broadcast specified resource related information of a first user equipment through a broadcast channel may be that: the second user equipment broadcasts the specified resource related information of the first user equipment in a broadcast channel (PBCH), and the first user equipment can obtain the specified resource related information of the first user equipment by listening to the broadcast channel.

Specifically, a specific implementation for the network device to broadcast specified resource related information of a first user equipment through a broadcast channel may be that: the network device broadcasts the specified resource related information of the first user equipment in a broadcast channel (PBCH); after the second user equipment obtains the specified resource related information of the first user equipment by listening to the broadcast channel, the second user equipment transmits the specified resource related information of the first user equipment that is obtained by listening to the first user equipment.

In an example, the specified resource related information of the second user equipment is configured by the network device. That is, the network device directly configures the specified resource related information for the second user equipment.

In an example, the specified resource related information of the second user equipment is determined by the second user equipment according to the ID of the second user equipment. That is, the second user equipment determines its own specified resource information according to its own ID (such as using a manner of ID Mode X, X configurable). The ID can be configured by the second user equipment or the network device. For example, the remainder obtained after the second user equipment ID Mode X is 1, then the PRB1 + configured period 1 is used. The above configuration can be pre-configured.

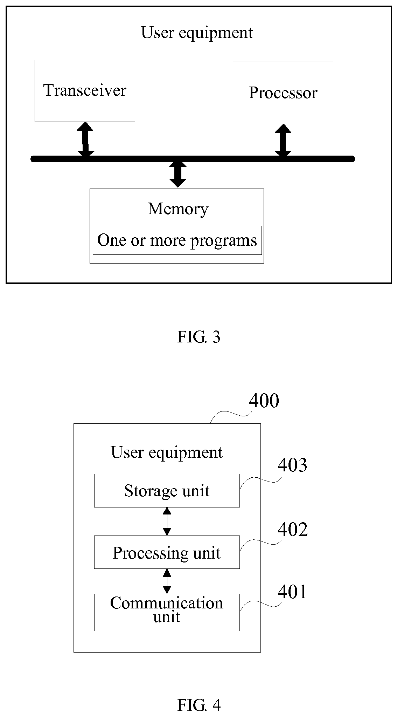

Consistent with the above embodiment shown in FIG. 2a, please refer to FIG. 3, FIG. 3 is a schematic structural diagram of a user equipment according to an embodiment of the present application. The user equipment is applied to a communication system, where the communication system includes a user equipment group, and the user equipment group includes a plurality of user equipments. As shown in the figure, the user equipment includes one or more processors, one or more memories, one or more transceivers, and one or more programs, where the one or more programs are stored in the memories and configured to be executed by the one or more processors, and the programs include instructions for performing the following steps:

performing data transmission and reception according to specified resource related information, the specified resource related information including a plurality of specified times and/or a plurality of specified resources.

In an example, the plurality of user equipments include a plurality of first user equipments and/or a second user equipment, and the second user equipment is a group head equipment of the user equipment group; where the second user equipment is different from the first user equipments, or, the second user equipment is one of the plurality of first user equipments.

In an example, each first user equipment corresponds to one piece of specified resource related information; when at least two first user equipments in the plurality of first user equipments meet a preset condition, the specified resource related information corresponding to the at least two first user equipments is the same; when at least two first user equipments in the plurality of first user equipments do not meet a preset condition, the specified resource related information corresponding to the at least two first user equipments is different.

In an example, the communication system further includes a network device; where the specified resource related information of the first user equipments is configured by the second user equipment; or, the specified resource related information of the first user equipments is configured by the network device; or, the specified resource related information of the first user equipments is determined by the first user equipments according to the IDs of the first user equipments.

In an example, the specified resource related information further includes specified transmission power.

In an example, when the specified resource related information of the first user equipments is configured by the second user equipment, or, when the specified resource related information of the first user equipments is configured by the network device, the specified resource related information of the first user equipments is configured by the second user equipment or the network device through system information or dedicated signaling.

In an example, the specified resource related information of the second user equipment is configured by the network device; or, the specified resource related information of the second user equipment is determined by the second user equipment according to the ID of the second user equipment.

In an example, when the specified resource related information of the first user equipments is configured by the second user equipment, the specified resource related information used by the second user equipment is configured by the network device.

In an example, the spacing between any two adjacent specified times of the plurality of specified times is the same, and a plurality of specified resources corresponding to each specified time are the same.

It can be seen that, in this solution, the user equipments in the user equipment group 120 do not need to perform resource scheduling before performing data transmission and reception every time, thereby reducing the signaling overhead of resource scheduling; in addition, each user equipment in the user equipment group performs data transmission and reception according to the corresponding resource related information, thereby reducing the conflict probability when the UEs within the group occupy resources.

In order to implement the above functions, the user equipment includes corresponding hardware structures and/or software modules for executing the respective functions. Those skilled in the art will readily appreciate that the present application can be implemented in hardware or in the form of a combination of hardware and computer software with reference to the units and algorithm steps of the examples described in the embodiments disclosed herein. Whether a function is implemented in hardware or in the form of computer software driving hardware depends on the specific application of the solution and design constraints. A skilled person can use different methods for each specific application to implement the described functionality, and such implementation should not be considered beyond the scope of the present application.

In the embodiments of the present application, functional unit division may be performed for a user equipment according to the foregoing method examples, for example, the division of respective functional units can be performed corresponding to respective functions, or two or more functions can be integrated into one processing unit. The above integrated unit can be implemented either in the form of hardware or in the form of a software program module. It should be noted that, the unit division in the embodiments of the present application is schematic and is only a logical function division, and other division manners may be used in the actual implementation.

In the case of using an integrated unit or module, FIG. 4 shows a block diagram of a possible functional unit constitution of the user equipment involved in the above embodiments. User equipment 400 includes: a processing unit 401 and a communication unit 402. The processing unit 401 is configured to perform control management on actions of the user equipment, for example, the processing unit 401 is configured to support the user equipment to perform the step 201 in FIG. 2 and/or other processes for the techniques described herein. The communication unit 402 is configured to support communication between the user equipment and other equipments, such as communication with the network device and other user equipments within the same group shown in FIG. 1. The user equipment can further include a storage unit 403, which is configured to store program codes and data of the user equipment.

The processing unit 401 can be a processor or a controller, for example, the processing unit 401 may be a Central Processing Unit (CPU), a general-purpose processor, a Digital Signal Processor (DSP), an Application-Specific Integrated Circuit (ASIC), a Field Programmable Gate Array (FPGA) or other programmable logic device, transistor logic device, hardware component, or any combination thereof. It can implement or perform various exemplary logical blocks, modules and circuits described in connection with the disclosure of the present application. The processor may also be a combination of computing functions, for example including a combination of one or more microprocessors, a combination of a DSP and a microprocessor, etc. The communication unit 402 may be a transceiver, a transceiving circuit, a radio frequency chip, etc, and the storage unit 403 may be a memory.

When the processing unit 401 is a processor, the communication unit 402 is a communication interface, and the storage unit 403 is a memory, the user equipment involved in the embodiments of the present application can be the user equipment shown in FIG. 3.

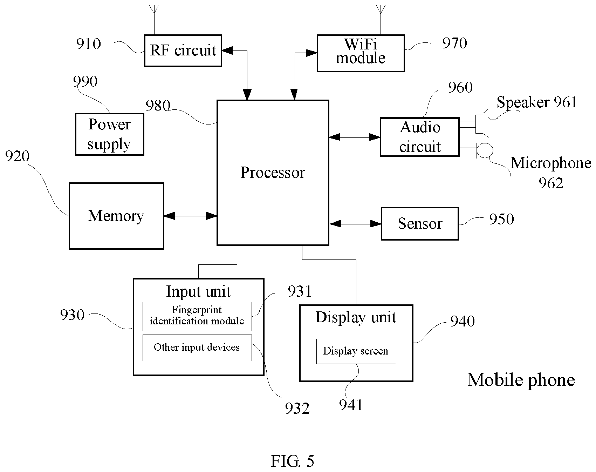

An embodiment of the present application further provides another user equipment, as shown in FIG. 5. For the convenience of description, only the parts related to the embodiments of the present application are shown, and for the specific technical details not disclosed, please refer to the method part of the embodiments of the present application. The user equipment can be any user equipment including a mobile phone, a tablet computer, a PDA (Personal Digital Assistant), a POS (Point of Sales), an in-vehicle computer, and the like. The mobile phone is taken as an example of the user equipment.

FIG. 5 is a block diagram showing a partial structure of a mobile phone related to a user equipment according to an embodiment of the present application. Refer to FIG. 5, the mobile phone includes: a Radio Frequency (RF) circuit 910, a memory 920, an input unit 930, a display unit 940, a sensor 950, an audio circuit 960, a Wireless Fidelity (WiFi) module 970, a processor 980, and a power supply 990 and the like. It will be understood by those skilled in the art that the structure of the mobile phone shown in FIG. 5 does not constitute a limitation to the mobile phone, and the mobile phone may include more or less components than those illustrated, or combine some components, or have different component arrangements.

The components of the mobile phone are specifically introduced below in conjunction with FIG. 5.

The RF circuit 910 can be configured to receive and transmit information. Generally, the RF circuit 910 includes, but is not limited to, an antenna, at least one amplifier, a transceiver, a coupler, a Low Noise Amplifier (LNA), a duplexer, etc. In addition, the RF circuit 910 can also communicate with the network and other equipments through wireless communication. The above wireless communication may use any communication standard or protocol, including but not limited to Global System of Mobile communication (GSM), General Packet Radio Service (GPRS), Code Division Multiple Access (CDMA), Wideband Code Division Multiple Access (WCDMA), Long Term Evolution (LTE), e-mail, Short Messaging Service (SMS), etc.

The memory 920 can be configured to store software programs and modules, and the processor 980 executes various functional applications and data processing of the mobile phone by running the software programs and modules stored in the memory 920. The memory 920 can mainly include a program storage area and a data storage area, where the program storage area can store an operating system, an application required for at least one function, and the like; the data storage area can store data created according to the use of the mobile phone, etc. In addition, the memory 920 can include a high speed random access memory, and can also include a nonvolatile memory such as at least one magnetic disk storage device, flash memory device, or other volatile solid state storage device.

The input unit 930 can be configured to receive input digital or character information, and generate a key signal input related to user settings and function control of the mobile phone. Specifically, the input unit 930 can include a fingerprint identification module 931 and other input devices 932. The fingerprint identification module 931 can collect fingerprint data of the user on the fingerprint identification module 931. In addition to the fingerprint identification module 931, the input unit 930 can also include other input devices 932. Specifically, other input devices 932 may include, but are not limited to, one or more of a touch screen, a physical keyboard, a function key (for example a volume control button, a switch button, etc), a trackball, a mouse, a joystick, and the like.

The display unit 940 can be configured to display information input by the user or information provided to the user and various menus of the mobile phone. The display unit 940 can include a display screen 941. Optionally, the display screen 941 can be configured in the form of a Liquid Crystal Display (LCD), an Organic Light-Emitting Diode (OLED), etc. Although in FIG. 5, the fingerprint identification module 931 and the display screen 941 implement input and input functions of the mobile phone as two independent components, in some embodiments, the fingerprint identification module 931 can be integrated with the display screen 941 to implement input and playback functions of the mobile phone.

The mobile phone can also include at least one sensor 950, such as a light sensor, a motion sensor, and other sensors. Specifically, the light sensor may include an ambient light sensor and a proximity sensor, where the ambient light sensor can adjust the brightness of the display screen 941 according to the light and shade of the ambient light, and the proximity sensor can turn off the display screen 941 and/or backlight when the mobile phone is moved to the ear. As a type of motion sensor, an accelerometer sensor can detect the magnitude of acceleration in all directions (usually three axes), and can detect the magnitude and direction of gravity at rest, which can be used in applications for identifying the posture of the mobile phone (such as landscape and portrait screen switching, a related game, magnetometer posture calibration), vibration recognition related functions (such as a pedometer, tapping), etc. As for other sensors such as gyroscopes, barometers, hygrometers, thermometers, infrared sensors that can be configured on the mobile phone, they will not be repeated here.

The audio circuit 960, a speaker 961, a microphone 962 can provide an audio interface between the user and the mobile phone. The audio circuit 960 can transmit the converted electrical signal of the audio data to the speaker 961, and the speaker 961 converts it into a sound signal for playback; on the other hand, the microphone 962 converts the collected sound signal into an electrical signal, which is then received by the audio circuit 960 and converted into audio data, and then the audio data is played and processed by the processor 980, and transmitted to for example another mobile phone via the RF circuit 910, or the audio data is played to the memory 920 for further processing.

WiFi belongs to short-range wireless transmission technologies, and the mobile phone can help the user to transmit and receive e-mails, browse web pages, and access streaming media and the like through the WiFi module 970, which provides the user with wireless broadband Internet access. Although FIG. 5 shows the WiFi module 970, it can be understood that it does not belong to the necessary configuration of the mobile phone, but may be omitted as needed within the scope of not changing the essence of the invention.

The processor 980 is a control center of the mobile phone, connects various parts of the entire mobile phone using various interfaces and lines, and executes various functions of the mobile phone and processes data by running or executing software programs and/or modules stored in the memory 920 as well as invoking the data stored in the memory 920, thereby performing the overall monitoring of the mobile phone. Optionally, the processor 980 can include one or more processing units; preferably, the processor 980 can integrate an application processor and a modem processor, where the application processor mainly processes the operating system, user interfaces, and applications, etc, and the modem processor mainly processes wireless communication. It can be understood that the above modem processor may be not integrated into the processor 980.

The mobile phone also includes the power supply 990 (such as a battery) that supplies power to the various components, preferably, the power supply can be logically connected to the processor 980 through a power management system, so as to manage functions such as charging, discharging, and power consumption management through the power management system.

Although not shown, the mobile phone can further include a camera, a Bluetooth module, etc, and details are not described here.

In the foregoing embodiment shown in FIG. 2, the process of the user equipment side in the steps of the method can be implemented based on the structure of the mobile phone.

In the foregoing embodiment shown in FIG. 4, functions of the units can be implemented based on the structure of the mobile phone.

An embodiment of the present application further provides a computer readable storage medium, where the computer readable storage medium stores a computer program for electronic data exchange, where the computer program causes a computer to execute some or all of the steps described for the user equipment in the method embodiments described above.

An embodiment of the present application further provides a computer program product, where the computer program product includes a non-transitory computer readable storage medium storing a computer program, and the computer program is operative to cause a computer to execute some or all of the steps described for the user equipment in the methods described above. The computer program product can be a software installation package.

The steps of the methods or algorithms described in the embodiments of the present application may be implemented in a hardware manner, or may be implemented by a processor executing software instructions. Software instructions can be composed of corresponding software modules, and the software modules can be stored in a Random Access Memory (RAM), a flash memory, a Read Only Memory (ROM), an Erasable Programmable ROM (EPROM), an Electrically EPROM (EEPROM), a register, a hard disk, a removable hard drive, a Compact Disc Read-Only Memory (CD-ROM), or any other form of storage mediums known in the art. An exemplary storage medium is coupled to the processor to enable the processor to read information from the storage medium and write information to the storage medium. Of course, the storage medium can also be part of the processor. The processor and the storage medium may be located in an ASIC. In addition, the ASIC may be located in an access network device, a target network device, or a core network device. Of course, the processor and the storage medium may also exist in the access network device, the target network device, or the core network device as discrete components.

Those skilled in the art should be aware that in one or more of the above examples, the functions described in the embodiments of the present application may be implemented in whole or in part by software, hardware, firmware, or any combination thereof. When implemented in software, they may be implemented in whole or in part in the form of a computer program product. The computer program product includes one or more computer instructions. When the computer program instructions are loaded and executed on a computer, the processes or functions described in the embodiments of the present application are generated in whole or in part. The computer can be a general-purpose computer, a special-purpose computer, a computer network, or other programmable devices. The computer instructions can be stored in a computer readable storage medium or transmitted from one computer readable storage medium to another computer readable storage medium. For example, the computer instructions can be transmitted from one website site, computer, server or data center to another website site, computer, server or data center in a wired (for example, coaxial cable, fiber, Digital Subscriber Line (DSL)) or wireless (for example, infrared, wireless, microwave, etc) manner. The computer readable storage medium can be any available medium that can be accessed by the computer or a data storage device including a server, a data center, or the like that is integrated by one or more available mediums. The available medium may be a magnetic medium (for example, a floppy disk, a hard disk, a magnetic tape), an optical medium (for example, a digital video disc (DVD)), or a semiconductor medium (for example, a solid state disk (SSD)), etc.

The specific implementations described above further explain the objectives, technical solutions, and beneficial effects of the embodiments of the present application. It should be understood that the foregoing description is only specific implementations of the embodiments of the present application, but is not intended to limit the protection scope of the embodiments of the present application. Any modification, equivalent replacement, improvement and the like, which are made based on the technical solutions of the embodiments of the present application, should be included in the protection scope of the embodiments of the present application.

## Claims

1. A method for transmitting and receiving data, applied to a communication system, wherein the communication system comprises a user equipment group, and the user equipment group comprises a plurality of user equipments, wherein the method comprises:
performing, by the user equipments, data transmission and reception according to specified resource related information, the specified resource related information comprising a plurality of specified times and/or a plurality of specified resources.

2. The method according to claim 1, wherein the plurality of user equipments comprise a plurality of first user equipments and/or a second user equipment, and the second user equipment is a group head equipment of the user equipment group; wherein the second user equipment is different from the first user equipments, or, the second user equipment is one of the plurality of first user equipments.

3. The method according to claim 2, wherein each of the first user equipments corresponds to one piece of specified resource related information; when at least two first user equipments of the plurality of first user equipments meet a preset condition, the specified resource related information corresponding to the at least two first user equipments is the same; when at least two first user equipments in the plurality of first user equipments do not meet a preset condition, the specified resource related information corresponding to the at least two first user equipments is different.

4. The method according to claim 2 or 3, wherein the communication system further comprises a network device; wherein the specified resource related information of the first user equipments is configured by the second user equipment; or, the specified resource related information of the first user equipments is configured by the network device; or, the specified resource related information of the first user equipments is determined by the first user equipments according to IDs of the first user equipments.

5. The method according to any one of claims 1-4, wherein the specified resource related information further comprises specified transmission power.

6. The method according to claim 4 or 5, wherein when the specified resource related information of the first user equipments is configured by the second user equipment, or, when the specified resource related information of the first user equipments is configured by the network device, the specified resource related information of the first user equipments is configured by the second user equipment or the network device through system information or dedicated signaling.

7. The method according to any one of claims 2-6, wherein the specified resource related information of the second user equipment is configured by the network device; or, the specified resource related information of the second user equipment is determined by the second user equipment according to an ID of the second user equipment.

8. The method according to any one of claims 4-6, wherein when the specified resource related information of the first user equipments is configured by the second user equipment, the specified resource related information used by the second user equipment is configured by the network device.

9. The method according to claim 1 or 2, wherein a spacing between any two adjacent specified times of the plurality of specified times is the same, and a plurality of specified resources corresponding to each of the plurality of specified times are the same.

10. A user equipment, applied to a communication system, wherein the communication system comprises a user equipment group, and the user equipment group comprises a plurality of user equipments, wherein the user equipment comprises a processing unit and a communication unit,
the communication unit is configured to perform, through the communication unit, data transmission and reception according to specified resource related information, the specified resource related information comprising a plurality of specified times and/or a plurality of specified resources.

11. A user equipment, applied to a communication system, wherein the communication system comprises a user equipment group, and the user equipment group comprises a plurality of user equipments, wherein the user equipment comprises a processing unit and a communication unit, the user equipment comprises one or more processors, one or more memories, one or more transceivers, and one or more programs, the one or more programs are stored in the memories and configured to be executed by the one or more processors, the programs comprise instructions for performing following steps;
performing data transmission and reception according to specified resource related information, the specified resource related information comprising a plurality of specified times and/or a plurality of specified resources.

12. The user equipment according to claim 11, wherein the plurality of user equipments comprise a plurality of first user equipments and/or a second user equipment, and the second user equipment is a group head equipment of the user equipment group; wherein the second user equipment is different from the first user equipments, or, the second user equipment is one of the plurality of first user equipments.

13. The user equipment according to claim 11 or 12, wherein each of the first user equipments corresponds to one piece of specified resource related information; when at least two first user equipments of the plurality of first user equipments meet a preset condition, the specified resource related information corresponding to the at least two first user equipments is the same; when at least two first user equipments in the plurality of first user equipments do not meet a preset condition, the specified resource related information corresponding to the at least two first user equipments is different.

14. The user equipment according to claim 12 or 13, wherein the communication system further comprises a network device; wherein the specified resource related information of the first user equipments is configured by the second user equipment; or, the specified resource related information of the first user equipments is configured by the network device; or, the specified resource related information of the first user equipments is determined by the first user equipments according to IDs of the first user equipments.

15. The user equipment according to any one of claims 11-14, wherein the specified resource related information further comprises specified transmission power.

16. The user equipment according to claim 14 or 15, wherein when the specified resource related information of the first user equipments is configured by the second user equipment, or, when the specified resource related information of the first user equipments is configured by the network device, the specified resource related information of the first user equipments is configured by the second user equipment or the network device through system information or dedicated signaling.

17. The user equipment according to any one of claims 12-16, wherein the specified resource related information of the second user equipment is configured by the network device; or, the specified resource related information of the second user equipment is determined by the second user equipment according to an ID of the second user equipment.

18. The user equipment according to any one of claims 14-16, wherein when the specified resource related information of the first user equipments is configured by the second user equipment, the specified resource related information used by the second user equipment is configured by the network device.

19. The user equipment according to claim 11 or 12, wherein a spacing between any two adjacent specified times of the plurality of specified times is the same, and a plurality of specified resources corresponding to each of the plurality of specified times are the same.

20. A computer readable storage medium, storing a computer program for electronic data exchange, wherein the computer program causes a computer to execute the method according to any one of claims 1-9.

21. A computer program product, wherein the computer program product comprises a non-transitory computer readable storage medium storing a computer program, and the computer program is operative to cause a computer to perform the method according to any one of claims 1-9.
